# EUROPEAN PATENT APPLICATION

(11) **EP 1 675 075 A1**
(43) Date of publication of application: **28.06.2006**
(21) Application number: 04293142.8
(22) Date of filing: 27.12.2004
(51) Int. Cl.: G07F 7/10

(54) **A method for customizing authentication tokens such as smart cards**

(71) Applicant: Axalto SA, 92120 Montrouge (FR)
(72) Inventor: Cifelli, Giainto c/o Axalto S.A., 92120 Montrouge (FR)
(74) Representative: Jacquot, Ludovic R. G.

(57) **Abstract**

The invention relates to a device which comprises processor and memory means and which comprises software means (12,13,14,15) associated to said processor and memory means for implementing a customizing process onto authentication tokens such as smart cards which software means are at least partly made of code in script language (12,13,14), the device being characterized in that said software means are also partly made of code (15) of the type which is compiled from a programming source language so that code in script language and compiled code are both implemented in a same customizing process.

## Description

The invention relates to customizing of authentication tokens such as smart cards.

Authentication tokens are physically retrievable pieces of equipment which are associated with an electronic system so as to authenticate the user in said system.

The system can be a telecommunication network or a bank network but can also be an electronic module such as a cash machine or a limited access portail which requires authentication with said token so as to be passed through.

The authentication token typically includes a processor and a memory for performing an authentication process. Said process typically consists in performing a calculation with a secret key which is memorized in the token the result of which calculation is expected in the system so as to recognize the authenticating token.

Due mainly to the fact that they include processing and memorizing abilities, the authentication tokens are also used as a mean for storing information and a mean for processing some information in connection or not with the simple authentication process. Such processing of the token is usually called customizing.

Customizing includes as an example the fact to pre-store the telephone number of the subscriber of a phone card such as a SIM card.

A phone card such as a SIM card will also comprise for example a file in its memory which includes a phonebook, i.e. contacts of the user in the form of telephone dial numbers. Such a file will be present, even if empty, in the card when delivered to the user.

Any other type of information can be introduced in the token under the customizing process and is placed in a dedicated file which is also prepared in the token at the customizing step.

To this end customizing typically includes the fact to establish an arborescence of pre-memorised files, which typically comprise : security or authenticating data (Ki, Imsi, etc), SMS files (phonebook,etc).

Customizing also includes the fact to load applications in the token such as video games, particular sounds or image applications or even applications which are able to communicate with external devices, such as for example weather or news services applications.

In the case of credit cards, customization typically consists in pre-memorising the security / authenticating parameters of the card, and may also incorporate some services applications or applets.

In the case of credit cards, the customization typically includes also implementing a file arborescence which contains places for storing data relating to the bank account of the subscriber (e.g. amount limits, remaining amounts...)

Customizing can be carried out at different levels. It can be carried out by a phone operator or a bank authority, but it can also be carried out by the token manufacturer typically before the token is in the hands of the user.

In this last case, the customizing requirements are often specified by the phone operator or the bank authority.

Customizing is performed by machines which comprise data memorizing means and processing means.

Those customizing machines use to perform computer programs which are in the form of script programs.

A script program is a program which is directly interpretable by a processing machine so long as such machine is equipped with a software equipment which is called an interpreter. The interpreter indeed reads and directly performs on the fly the commands which are expressed in script language.

The GlobalPlatform consortium has expressed the need for using script in customizing machines and therefore the need to include interpreters in the customizing processes.

The recommended script language is Javascript language.

GlobalPlatform also requires that the script set of commands should make use of a basic group of programs called "Javascript Basic" and that this basic group of programs be extended with a group of additional programs called the "GP extension" for "Global Platform extension".

Another approach has also been proposed for implementing customization, in particular when a single and permanent type of customization is implemented on the cards.

In this other approach the whole customizing process is controlled by another type of software which is code obtained from the compilation of a C or C++ language source program.

Both of these approaches have their shortcomings.

In the script/interpreter approach, the script programs appear to be technically unsufficient as to the functionalities nowadays needed in customizing process. In addition it appears that script programs are quite expensive to develop due to the huge amount of time necessary to program them.

Furthermore script has the inconvenience to be easily read and understood by any person accustomed to it. As authenticating data to be introduced in the token are generally present in script programs used for customizing, the authentication data appear to be too easily reached in the script code.

In the compiled code approach such as compiled C++ control software of the customizing process, the main inconvenience is that any amendment to the implemented customizing process requires huge new programming intervention as well as the whole compilation of the program. These necessary steps for implementing the control software are heavy to realize.

A compilation furthermore requires a particular task called the delivery task which consists in checking and accepting the compiled code. This checking and accepting task is made mainly in view of planning and organization constraints.

Therefore the customizing processes which are controlled by software of the compiled language type appear to be heavy to manage.

The invention aims at providing a solution to both technical concerns inherent to script control and compiled language control of a customizing process applied to authenticating tokens.

This solution is proposed in the appended claims which recite methods and devices according to the invention.

Other advantages will appear from the description, in particular the fact that a compiled language file is hardly readable and therefore provides enhanced security possibilities.

Other features and advantages of the present invention will become apparent from the following description which will be taken in conjunction with the accompanying drawings.

In the drawings :
Figure 1 is a schematic block diagram showing an overall configuration of one embodiment of a customization machine according to the invention.
Figure 2 is a chart showing a flow of processing between different entities of the customization machine of figure 1.

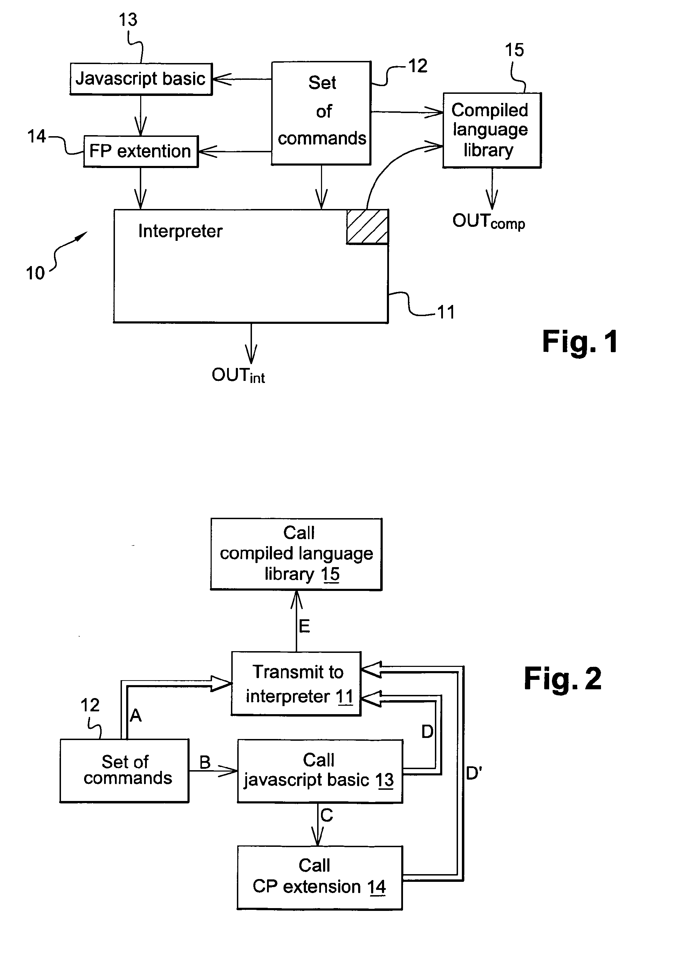

Figure 1 illustrates the software and data configuration of a customization machine used in a production site of smart cards such as SIM cards.
The customizing machine comprises processor and memory means which are not illustrated as such in figure 1 but which must be considered as a support for the different software entities which will be described here after and which are illustrated on figure 1.

One of the main software entities of the machine is an interpreter 11. Interpreter 11 receives instructions in script format and executes said instructions in the form of outputs OUTᵢₙₜ. Said outputs are typically some signals which control physical equipments and transfers of data so as to customize the cards.

A typical function actuated by such signal OUTᵢₙₜ will be a loading function i.e. the function of loading data in the smart cards.

Another typical function is a printing function for example of a typed report destinated to a phone operator to whom the SIM cards are destined. Such a printed report can consist of a series of authenticating data the same as the data which are loaded in the cards destinated to said operator.

Another function actuated by OUTᵢₙₜ consists in loading specific customization data such as personal phonebook spaces or particular applications as wished by the operator, in other words a driving function.

Another type of driving function may simply consist in physically transfering the card from one place to another on the production line.

Another function triggered by the interpreter through OUTᵢₙₜ signal is for example messaging, ie exchanging information with a remote server which exchanging of information can be realized previously and/or during customization. Such exchanged information can be for example cryptographic information which is necessary to secure some data in the card .

Interpreter 11 therefore controls such examples of functions in reponse to receiving itsetfcommands in script language. Those commands are provided to the interpreter 11 from a pre-memorized set of commands in script language whode role is to control the interpreter. Said set of commands being illustrated under the reference 12 in figure 1.

Set of commands 12 transmits commands directly to the interpreter 11 (step A in figure 2).

The set of commands 12 is also adjoined with libraries 13 and 14 of usual programs (classes). The set of commands 12 has the ability to call (step B in figure 2) any of such programs of libraries 13 and 14. Said programs of libraries 13 and 14 are also programmed in script language.

Said programs are stored primarily in the "Javascript basic" library 13, and some additional programs are stored in the "GP extension" library 14. The additional programs of the GP extension library 14 are typically called by the programs of the Javascript Basic library 13. Such a call step is referenced C in figure 2.

Any program of these both libraries have the ability to provide its included commands directly to the interpreter 11 (steps D and D' in figure 2). In other words, when the set of commands 12 calls a library of one of modules 13 or 14, then said called library provides its own set of pre-programmed commands directly to the interpreter 11 so as to complement the already provided commands of the controlling set of commands 12.

Once the commands of the called library 13 or 14 are performed by interpreter 11, the set of commands 12 provides interpreter 11 with the command which directly follows the now performed calling command of said library of library 13 or of library 14.

The illustrated overall configuration of figure 1 also comprises another library 15 of pre-programmed pieces of software.

This library 15 consists in pieces of software which are not in script language but which are pieces of compiled code obtained from a to-be-compiled programmation language such as C language or C++ language. Any other type of programmation language is available which is of the to-be-compiled type (Fortran, etc...).

Any of the compiled-language programs of library module 15 is also triggered by a call made from the controlling set of commands 12.

Although a direct call from the set of commands 12 is possible to a program of library 15, the presently described embodiment provides for the programs of library module 15 to be called via the interpreter 11. Such a call via the interpreter is referenced E in figure 2.

In other words the set of commands calls a program of library 15 by sending said call to the interpreter. Such call is in script language therefore interpreter directly understands it and transforms it into a direct call to the aimed program of library 15. The original call being expressed in script language, such call is primarily read by the interpreter 11 and then transformed into a call which is directly realizable by the processor supporting on which the customizing process is implemented.

In such embodiment, library 15 is therefore considered in the overall configuration as a physical equipment as far as the task to call a program of the library 15 is realized by interpreter 11.

In this aspect the programs in compiled code of library 15 are each attributed an identifiying parameter. Each call of the set of commands 12 includes the said identifying parameter of the program to be called. A parameter identifying a given program of library 15 is expressed in a command of set 12 each time such command is intended to call said given program of library 15.

Decorated names offer enough information to map into the Javascript hierarchy calls to such new object. A low-level call or a known format of methods is for example used. Compiled objects are created and destroyed by calling static methods of the same, as will be explained hereafter.

When a compiled program of library 15 is called, said called compiled program is directly transformed into signals OUT_{comp} by the processor. Indeed as far as the program is compiled it is ab initio directly transformed into signals by the processor. No further software equipment such as an interpreter is needed by the processor to implement a compiled program. Such signals OUT_{comp} are also directed at piloting physical equipments and transfer of data so as to customize the cards.

Said performing of the programs of library 15 is carried out by the processor without the need of the interpreter as far as the compiled language of the programs is directly understood by the processor.

Pieces of software that were previously placed in the script set of commands will be advantageously placed in the compiled language programs of library 15 so that they are hardly available to any person during the customizing process. This is particularly advantageous when such pieces of software include security or secret authentication data which are to be introduced in the card by means of the present customization system.

The transfer of an authenticating key can for example be realized without having to express the key value in the script. The authenticating data are directly output from a piece of compiled language software.

This embodiment also provides a smart way to access resources such as a smartcard or a TCP/IP remote service.

The commands sent to the library 15 are not limited to calling commands.

Indeed interpreter 11 has the ability to receive commands in script form which the interpreter transforms in actions on the library 15 such as adding programs to the library 15 or canceling programs of the library 15.

Such actions can be triggered by the set of commands 12 or can be triggered by commands which are provided to the interpreter at another moment such as for example during maintenance periods.

Such commands to library 15 other than calls to programs are for example provided by a specific set of commands in script language, which specific set of commands is other than the set of commands 12 and which set of commands is specifically aimed at introducing modifications into the compiles programs of library 15 via interpreter 11.

Although described in the frame of authentication tokens the present technical features are also adapted to customizing portable objects the main function of which is to carry rights to particular services or purchases. An example of such rights carrying portable objects are prepaid telephone cards of the type which may be used in public phone booths.

## Claims

1. A device which comprises processor and memory means and which comprises software means (12,13,14,15) associated to said processor and memory means for implementing a customizing process onto authentication tokens such as smart cards which software means are at least partly made of code in script language (12,13,14), the device being **characterized in that** said software means are also partly made of code (15) of the type which is compiled from a programming source language so that code in script language and compiled code are both implemented in a same customizing process.

2. The customizing device of claim 1, **characterized in that** it includes a script interpreter (11) and a memorized set of commands in script language so that the interpreter makes the processor means carry out said commands and actuates customization tasks under the control of said script commands, the customizing device including a library of programs (15) in compiled code each program of which is performed when such a program is called by the set of commands in script language.

3. A customization device according to claim 2, **characterized in that** the interpreter (11) has the ability to transform a call in script language for a compiled code program of said compiled code library (15) into having the processor read and perform said compiled code program.

4. A customization device according to claim 3, **characterized in that** the compiled code programs of the compiled code library (15) are directly performed by the processor when called by the interpreter.

5. A customization device according to any of the previous claims, **characterized in that** the code of the type which is compiled from a programming source language (15) is compiled from C language or from C++ language.

6. A customization device according to any of the previous claims, **characterized in that** it includes a Javascript Basic library of programs (13) and a GlobalPlatform extension library of programs (14) .

7. A method for customizing authentication tokens such as smart cards comprising the fact to control a customization process at least partly with software code in script language (12,13,14), the method being **characterized in that** it comprises the fact to control said customization process at least partly with software code of the type which is compiled from a programming source language (15).

8. A customization method according to claim 7, **characterized in that** it comprises the fact to use a script interpreter (11) and a memorized set of commands in script language (12) and the fact to provide the set of commands to the interpreter so that the interpreter makes processor means carry out said commands and thereby carry out customization tasks, the method including the fact to make use of at least a library of programs (15) any program of which is performed by the processor when such a program is called by the set of commands in script language which programs are expressed in software code of the type which is compiled from a programming source language.

9. An authentication token such as a smart card **characterized by** the fact that it is customized by use of a device which is partly controlled by software code in script language (12,13,14) and partly controlled by software code of the type which is compiled from a programming source language (15).

10. A software gear for customizing authentication tokens such as smart cards said software gear comprising a piece of software which initiates the performing of customizing tasks in a customizing process said piece of software being expressed in script language (12,13,14), **characterized in that** the software gear also comprises a second piece of software (15) which second piece of software is also able to initiate the performing of customizing tasks during said customizing process, said second piece of software being expressed in code of the type which is compiled from a programming source language.
